# EUROPEAN PATENT APPLICATION

(11) **EP 4 417 447 A1**
(43) Date of publication of application: **21.08.2024**
(21) Application number: 23157456.7
(22) Date of filing: 20.02.2023
(51) Int. Cl.: B60H 1/22, H01M 10/625

(54) **ELECTRICAL HEAT EXCHANGER**

(71) Applicant: VALEO SYSTEMES THERMIQUES, 78320 Le Mesnil Saint-Denis (FR)
(72) Inventor: GAS, Pierre, 10800 Prague (CZ); RUZICKA, Ales, 10800 Prague (CZ); ALCOCER, Oscar Eduardo, 50000 Toluca (MX)
(74) Representative: Valeo Systèmes Thermiques

(57) **Abstract**

The present invention relates to an an electrical heat exchanger (1) for the circulation of a coolant fluid, comprising at least one casing (2, 2A, 2B) and at least one electrical heating element (22, 22A, 22B), said casing (2, 2A, 2B) comprising a first portion (12) and a second portion (14) joined along an interface plane to define an enclosure (18) for receiving said electrical heating element (22, 22A, 22B), the casing (2, 2A, 2B) comprising a first longitudinal side (4) and a second longitudinal side (6), and a first lateral side (8) and a second lateral side (10) both extending between the longitudinal sides (4, 6), the casing (2, 2A, 2B) having at least one port (24, 24A, 24B) projecting out of the first lateral side (8) and extending longitudinally to constitute an extension of one longitudinal side (4, 6).

## Description

The invention relates to heat exchangers, and more particularly to electrical heat exchangers for automotive vehicles.

A vehicle generally includes a heater for heating a fluid, generally air, to be supplied to a passenger compartment. Additionally or alternatively, the heater is used to supply heated air to demist or defrost a windscreen of the vehicle. With the emergence of electric vehicles and hybrid vehicles, the heater is also applicable for battery thermal management. The heaters can be used for efficient thermal management of the batteries used for powering the electric motor, thereby drastically enhancing the service life of the batteries. The fluid to be heated is generally passed through a heat exchanger, which includes a heating element such as for example heat exchange flow pipes through which a heated fluid circulates in case of thermal heater, or an electrical resistive element supplied with current in case of an electrical resistive heater. Particularly, the air to be heated circulates across the heating element of the heat exchanger and extracts heat from the heating element.

To this end, electrical heat exchangers with flat compact configurations have been manufactured, such configurations addressing packaging issues. However, certain arrangements of the aforementioned flat heaters inside the vehicle may lead to the formation of air bubbles, particularly when air is trapped in a corner of the heaters after they have been filled with a coolant fluid.

The present invention fits into this context by providing an electrical heat exchanger designed to prevent air trapping while still offering an even fluid distribution inside the electrical heat exchanger.

In this context, the present invention is directed to an electrical heat exchanger for the circulation of a coolant fluid, comprising at least one casing and at least one electrical heating element, said casing comprising a first portion and a second portion joined along an interface plane to define an enclosure for receiving said electrical heating element, the casing comprising a first longitudinal side and a second longitudinal side, and a first lateral side and a second lateral side both extending between the longitudinal sides, the casing having at least one port projecting out of the first lateral side and extending longitudinally so that it constitutes an extension of one of the longitudinal sides.

The electrical heat exchanger according to the invention is here an electrical fluid heater. It is intended to equip a vehicle, for instance an automotive vehicle, in order to create a flow of heated air for functions such as the heating of an interior of the vehicle, the demisting or defrosting of its windscreen, or the thermal management of its batteries. Such an electrical heat exchanger comprises a casing which is here made of two parts, a first portion and a second portion, which are substantially symmetrical and are joined together to enclose an electrical heating element. The present heater being electrical, its electrical heating element comprises a resistive element. The casing has a substantially rectangular shape, which is delimited by two longitudinal sides and two lateral sides which are respectively opposed. A purpose of the electrical heat exchanger is to prevent air from being trapped inside the casing, which is achieved with the particular shape and disposition of its port. Such port may be an inlet or an outlet. The port projects out of one of the lateral sides and it constitutes an extension of one of the longitudinal sides. In other words, the port is a made of an elongation of this longitudinal side. It is here understood that "constituting an extension" means that the port shares at least a face, an end or an edge with the corresponding longitudinal side.

Such disposition ensures that the port is at a highest position of the casing whatever the orientation of the electrical heat exchanger in the vehicle may be, thus preventing air bubbles from occurring.

As an option of the invention, the port has a funnel shape.

Such funnel shape is configured to direct the coolant fluid through the port, either when it enters the electrical heat exchanger or when it exits it. The funnel shape may have a portion which substantially resembles a right triangle when the electrical heat exchanger is viewed from a direction perpendicular to the interface plane, with for instance the elongation of the longitudinal side forming its opposite side, the first lateral side forming its hypotenuse, and a portion of the port joining them forming its adjacent side. The funnel shape may have a rounded portion in the continuity of the right triangle shaped portion, which is joined with connectors or end pieces of the electrical heat exchanger. According to an optional characteristic of the invention, the first lateral side out of which the port projects comprises a segment which extends along a direction which is secant at a non-90° angle with a direction of the longitudinal side.

This segment corresponds to the hypotenuse of the aforementioned right triangle shaped portion. It is an end segment of the first lateral side which is secant but not perpendicular to the direction of the longitudinal side.

According to another optional characteristic of the invention, the electrical heating element extends between the lateral sides and passes through at least one of the longitudinal sides.

As mentioned before, the electrical heating element comprises a resistive element. It may also comprise a plate around which or along which the resistive element extends. The fact that the electrical heating element passes through the longitudinal side makes them easily accessible for users of the electrical heat exchanger, for instance to facilitate the electrical connection of the electrical heating element.

In some embodiments, the at least one casing is configured so that the coolant fluid flows simultaneously between the first portion and the electrical heating element and between the second portion and the electrical heating element.

The coolant fluid thus flows around the electrical heating element, in an annular shape around it.

According to an optional characteristic, the at least one casing is a first casing and the at least one electrical heating element is a first electrical heating element, the electrical heat exchanger further comprising a second casing enclosing a second electrical heating element, the first casing and the second casing being stacked so that both their first and second longitudinal sides and their first and second lateral sides are respectively aligned.

In this embodiment, there are two casings, with a first casing and a second casing, each with a first portion and a second portion enclosing an electrical heating element. The two casings are stacked along the direction perpendicular to the interface plane. The way in which the casings are stacked allows for the electrical heating elements to be aligned, thus facilitating their electrical connection. Such stacking also facilitates welding operations, the symmetric design allowing the same tools to be used for every electrical heating element, which entails reduction costs.

In some embodiments, the electrical heat exchanger is configured so that the coolant fluid follows a U-turn trajectory between the first casing and the second casing.

The first and second casing are stacked so that the second portion of the first casing leans against the second portion of the second casing, whereas their first portions are opposite to each other. Inside the electrical heat exchanger, the coolant fluid follows a U-turn trajectory between both the first portion of the first casing and the first electrical heating element and the second portion of the first casing and the first electrical heating element on the one hand, and both the second portion of the second casing and the second electrical heating element and the first portion of the second casing and the second electrical heating element on the other hand.

According to another optional characteristic, the first casing and the second casing are in fluid communication via at least an opening in the second portion of the first casing and at least an aperture in the second portion of the second casing.

This opening and this aperture preferably face each other. It is here understood that "fluid communication" means that the coolant fluid can circulate from the first casing to the second casing via the opening and the aperture. In some embodiments, there may be multiple openings and/or multiple apertures.

According to another optional characteristic of the invention, the port of the first casing is an inlet constituting an extension of the first longitudinal side and the port of the second casing is an outlet constituting an extension of the second longitudinal side.

As the first and the second casings are stacked so that their respective first longitudinal sides are aligned and their respective second longitudinal sides are aligned, this means that the inlet and the outlet are positioned on opposite lateral ends of the electrical heat exchanger. Due to the stacking, there is an offset between this inlet and this outlet.

In some embodiments, the inlet and the outlet are symmetrical with respect to a straight line which passes through a midpoint of a junction plane between the first casing and the second casing.

The junction plane is the plane which separates the first casing and the second casing, and along which they both extend. This junction plane is perpendicular to the interface plane between the first portion of the casings and their second portion. The midpoint is a point of this junction plane which is placed at a same distance from either the first longitudinal sides or the second longitudinal sides. Such symmetry has advantages during the manufacturing process of the electrical heating exchanger as manufacturing the ports is facilitated since they are similar.

According to another optional characteristic of the invention, there is a single electrical heating element in each of the first casing and the second casing. Having a single electrical element by casing increases heat transfer efficiency.

In other words, the first casing contains only one electrical heating element and the second casing contains only one electrical heating element.

In some embodiments, turbulators are placed between the at least one casing and the electrical heating element.

According to an optional characteristic of the invention, the turbulators are disposed between the casing and the electrical heating element, for example between a main face of the casing and a main face of the electrical heating element.

Such turbulators are used to induce turbulences in the coolant fluid flow, in order to distribute it evenly along the electrical heating element. They may increase a surface of the electrical heating element which is in contact with the coolant fluid, and thus increase the heat transfers.

In some embodiments, the first portion and the second portion are welded together.

The invention also relates to a vehicle comprising an electrical heat exchanger as previously described.

Other characteristics, details and advantages of the invention will become clearer on reading the following description, on the one hand, and several examples of realisation given as an indication and without limitation with reference to the schematic drawings annexed, on the other hand, on which:
[Fig. 1] is a perspective view of an electrical heat exchanger according to the invention, placed in a first orientation;
[Fig. 2] is a perspective view of the electrical heat exchanger of figure 1, placed in a second orientation;
[Fig. 3] is a cross-section view of the electrical heat exchanger in its second orientation;
[Fig. 4] is a cross-section view of part of the electrical heat exchanger in its first orientation.

The characteristics, variants and different modes of realization of the invention may be associated with each other in various combinations, in so far as they are not incompatible or exclusive with each other. In particular, variants of the invention comprising only a selection of features subsequently described in from the other features described may be imagined, if this selection of features is enough to confer a technical advantage and/or to differentiate the invention from prior art.

Like numbers refer to like elements throughout drawings.

In the following description, the designations "longitudinal", "transversal" and "vertical" refer to the orientation of the electrical heat exchanger according to the invention. A longitudinal direction corresponds to a direction along which its longitudinal sides extend, this longitudinal direction being parallel to a longitudinal axis L of a coordinate system L, V, T shown in the figures. A transversal direction corresponds to a direction along which its lateral sides extend, this transversal direction being parallel to a transverse axis T of the coordinate system L, V, T, and perpendicular to the longitudinal axis L. Finally, a vertical direction corresponds to a vertical axis V of the coordinate system L, V, T, the vertical axis V being perpendicular to the longitudinal axis L and the transversal axis T.

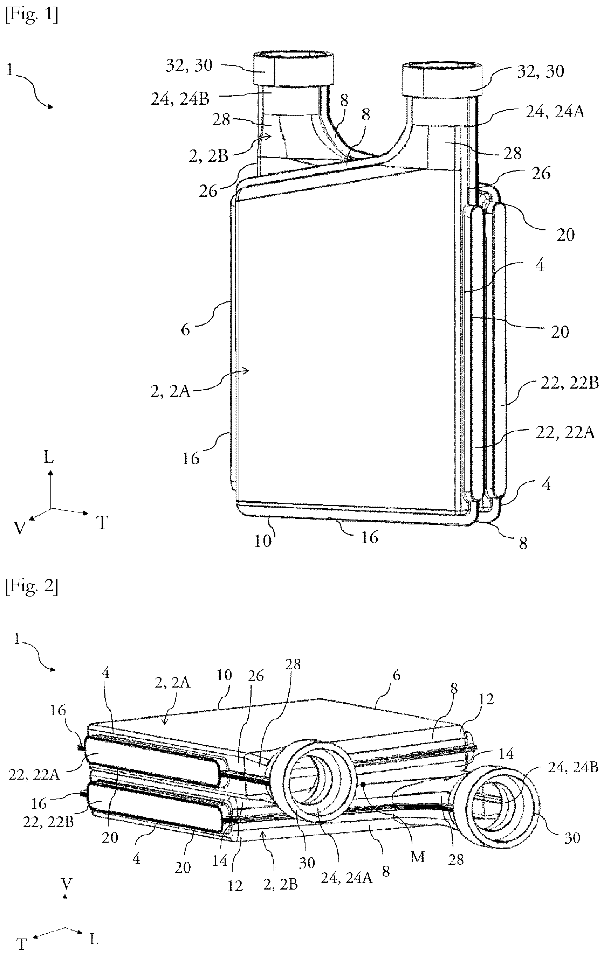

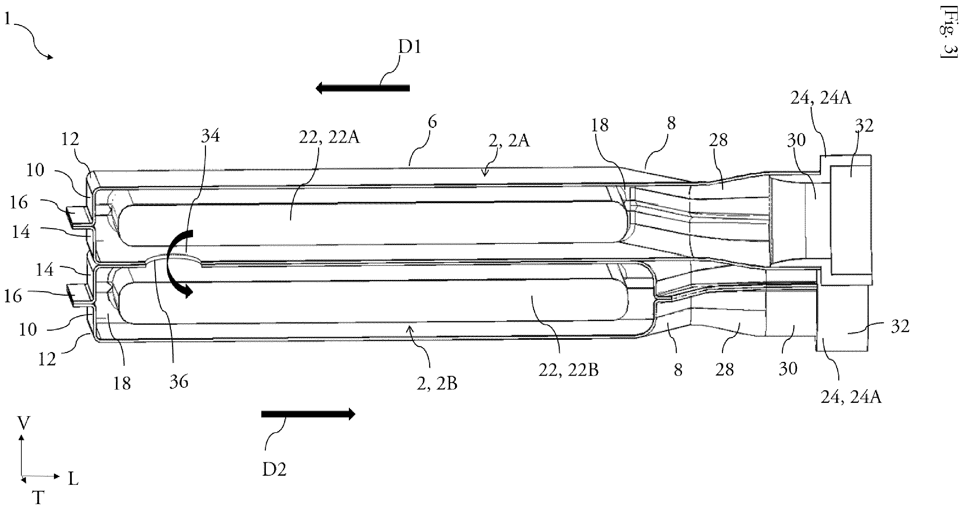

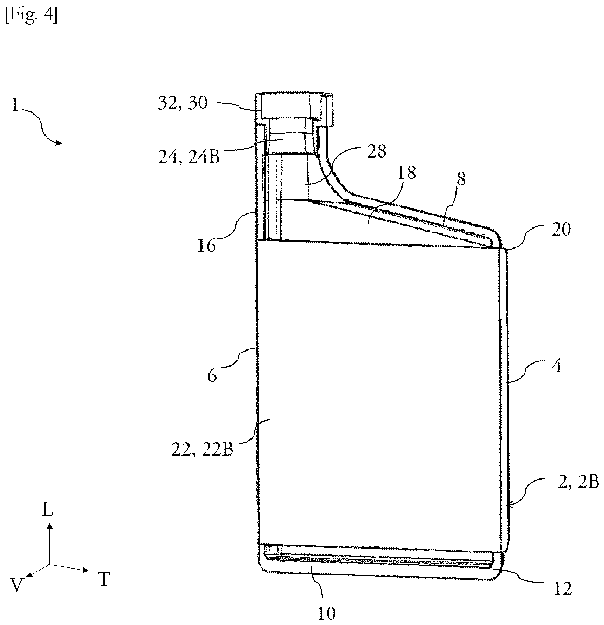

Figures 1 and 2 are perspective views of an electrical heat exchanger 1 for the circulation of a coolant fluid according to the invention, with figures 3 and 4 being cross-section views. This electrical heat exchanger 1, or electrical fluid heater 1, is intended to equip an automotive vehicle so as to create a flow of heated air inside of it. Such air flow is heated thanks to the circulation of the coolant fluid in the electrical heat exchanger 1, which exchanges calories to heat the air which passes through the electrical heat exchanger 1.

The electrical heat exchanger 1 is shown in figures 1 and 4 in a first orientation, whereas it is in a second orientation on figures 2 and 3. Both the first orientation and the second orientation correspond to orientations the electrical heat exchanger 1 may be installed in when it equips the automotive vehicle.

The electrical heat exchanger 1 comprises at least one casing 2, which is an outer shell of the electrical heat exchanger 1. As is represented on the embodiments illustrated on the figures, here the electrical heat exchanger 1 comprises two casings 2 with a first casing 2A and a second casing 2B. While only one of these casings 2A, 2B will now be described in detail, it is to be understood that unless stated otherwise the characteristics described with regard to this casing are applicable to the other.

The casing 2 has two longitudinal sides 4, 6, with a first longitudinal side 4 and a second longitudinal side 6, as well as two lateral sides 8, 10, among which a first lateral side 8 and a second lateral side 10.

The longitudinal sides 4, 6 extend along the longitudinal direction L, whereas the lateral sides 8, 10 extend along the transversal direction T. The two longitudinal sides 4, 6 are parallel to each other and extend between, at each of their ends, the lateral sides 8, 10. While the second lateral side 10 is substantially perpendicular to both the first longitudinal side 4 and the second longitudinal side 6, the first lateral side 8 comprises a segment which is secant but not perpendicular to the longitudinal direction L. In other words, this segment forms a slope and extends along a direction which is at a non-90 ° angle with the direction in which the longitudinal sides 4, 6 extend. The longitudinal sides 4, 6 and the lateral sides 8, 10 are joined together by faces of the casing 2 which mainly extend in longitudinal-transversal planes.

The casing 2 is made of two half-shells which are assembled together, namely a first portion 12 and a second portion 14, each including a face of the casing 2. The first portion 12 and the second portion 14 are more precisely joined along an interface plane, which virtually divides the casing 2 in two substantially symmetrical parts. The two portions 12, 14 are thus of complimentary profiles which may be welded together. Alternatively, these two portions 12, 14 may be brazed together along an edge 16, this edge 16 being particularly visible on figure 3.

The first portion 12 and the second portion 14 are not plane, so that when they are joined, they delimit between them a volume or enclosure 18 which is visible on figures 3 and 4. This enclosure 18 is partially open, as both the first longitudinal side 4 and the second longitudinal side 6 are provided with through holes 20. These through holes 20 are of an oval shape and they are symmetrical according to a longitudinal-vertical plane perpendicular to the interface plane and placed at a same distance from each longitudinal side 4, 6.

The electrical heat exchanger 1 comprises at least one electrical heating element 22 which is of a substantially rectangular shape. Although this electrical heating element 22 is here schematically represented in a simple form, it may comprise a plate as well as a resistive element such as PTC (positive temperature coefficient) resistors in the form of wires wrapped around this plate. The electrical heating element 22 is at least partially enclosed in the enclosure 18. More particularly, the electrical heating element 22 extends along the longitudinal direction L, along the faces of the casing 2 and between the lateral sides 8, 10; as can be seen on figure 4, it is placed at a distance from both these lateral sides 8, 10. Conversely, along the transversal direction T the electrical heating element 22 extends out of the casing 2 so that it passes through at least one of the longitudinal sides 4, 6, here through both longitudinal sides 4, 6 via their respective through holes 20. The fact that the electrical heating element 22 passes through the longitudinal sides 4, 6 makes the electrical heating element 22 easily accessible for it to be connected to a power source.

Although it is not shown on the figures, it should be noted that the electrical heat exchanger 1 comprises turbulators which are used to disrupt the coolant fluid flow inside the casing 2. More particularly, these turbulators are placed between the casing 2 and the electrical heating element 22, along this electrical heating element 22. They are disposed in the enclosure 18 along main faces of the electrical heating element 22, in contact with main faces of the casing.

Coolant fluid is fed to the electrical heat exchanger 1 and discharged from it via at least one port 24. This port 24 is either an inlet to let coolant fluid in the electrical heat exchanger 1 or an outlet to let it out of it.

According to the invention, the port 24 projects out of the first lateral side 8. As mentioned before, the first lateral side 8 is the one which, out of the two lateral sides 8, 10, is not perpendicular to the longitudinal sides 4, 6. The port 24 mainly extends along the longitudinal direction D, in a manner such that it constitutes an extension of one of the longitudinal sides 4, 6; in other words, it is an elongation of this longitudinal side 4, 6. As is particularly visible on figures 1 and 2, the port 24 is an extension of a face 26 of the longitudinal side 4, 6, so that this face 26 is prolonged by a face of the port 24. The port 24 is thus a highest point of the electrical heat exchanger 1, whether it is in its first orientation as in figures 1 and 4 or in its second orientation as is the case in figures 2 and 3.

The port 24 has a general funnel shape, which is designed to facilitate the entry of coolant fluid in the casing 2 when the port 24 is an inlet and to facilitate its exit when it is an outlet. This funnel shape is partly delimitated by the slope formed by the first lateral side 8 and it is an extension of this first lateral side 8. More generally, the port 24 has both a right-triangle shaped portion 28 and a rounded portion 30, which are particularly visible on figures 1 and 4. This rounded portion 30 receives an end piece 32 for the junction of the electrical heat exchanger 1 to a hose within which the coolant fluid flows. The right-triangle shaped portion 28 links the rounded portion 30 and the casing 2. This right-triangle shaped portion 28 essentially constitutes the funnel shape.

The disposition of the port 24 is such that the casing 2 is configured so that the coolant fluid flows around the electrical heating element 22, in the space where the turbulators are disposed. Thus, the coolant fluid flows between the first portion 12 of the casing 2 and the electrical heating element 22 on the one hand, and between its second portion 14 and the electrical heating element 22 on the other hand, both at the same time. In other words, the electrical heating element 22 creates a diversion in the coolant flow so that it passes both over it and under it according to the vertical direction V.

As mentioned before, in some embodiments the electrical heat exchanger 1 according to the invention comprises, in lieu of its at least one casing 2, both a first casing 2A and a second casing 2B. Such an electrical heat exchanger 1 is illustrated on figures 1 to 3. When there are two casings 2A, 2B, each of them has a first portion 12 and a second portion 14 enclosing an electrical heating element 22. The first casing 2A thus encloses a first electrical heating element 22A while the second casing 2B encloses a second electrical heating element 22B. As can be seen on the figures, each of the first casing 2A and the second casing 2B comprises a single electrical heating element 22. Although not illustrated here, in alternative embodiments the first casing 2A and/or the second casing 2B could comprise multiple electrical heating elements 22.

The first and the second casing 2A, 2B are stacked on top of each other according to the vertical direction V. The first casing 2A is aligned with the second casing 2B in that their respective longitudinal sides 4, 6 are aligned and their respective lateral sides 8, 10 are aligned according to the vertical direction V. In other words, according to this vertical direction V the first longitudinal side 4 of the first casing 2A is aligned with the first longitudinal side 4 of the second casing 2B, the second longitudinal side 6 of the first casing 2A is aligned with the second longitudinal side 6 of the second casing 2B, the first lateral side 8 of the first casing 2A is aligned with the first lateral side 8 of the second casing 2B, and the second lateral side 10 of the first casing 2A is aligned with the second lateral side 10 of the second casing 2B. In addition, the casings 2A, 2B are stacked so that the second portion 14 of the first casing 2A faces the second portion 14 of the second casing 2B and is in contact with it.

One difference between the first casing 2A and the second casing 2B lies in the fact that the port 24 is an extension of the first longitudinal side 4 on the first casing 2A, whereas it is an extension of the second longitudinal side 6 on the second casing 2B. Such a disposition is configured to improve the coolant fluid flow within the two casings 2A, 2B.

While being extensions of different longitudinal sides 4, 6, the respective port 24 of each the first casing 2A and the second casing 2B protrudes from the first lateral side 8. As a result, the port 24 of the first casing 2A and the port 24 of the second casing 2B are located on a same longitudinal end of the electrical heat exchanger 1.

In some embodiments, the port 24 of the first casing 2A is an inlet 24A for feeding coolant fluid to the electrical heat exchanger 1, the port 24 of the second casing being an outlet 24B for discharging the coolant fluid once it has exchanged calories with the air passing through the electrical heat exchanger 1. As the first casing 2A and the second casing 2B are stacked and given that they are located on opposite longitudinal sides 4, 6, there is an offset between the inlet 24A and the outlet 24B, such outset being particularly visible on figure 2.

This offset can be defined both according to the vertical direction V and the transversal direction T. It follows that the inlet 24A of the first casing 2A and the outlet 24B of the second casing 2B are symmetrical according to a straight line passing through a midpoint M of a junction plane between the first casing 2A and the second casing 2B. This midpoint M is illustrated on figure 2. The junction plane virtually separates the electrical heat exchanger 1 in two, meaning that the midpoint M is equidistant from a plane in which both first longitudinal sides 4 mainly extend, and a plane in which the two second longitudinal sides 6 mainly extend. The junction plane is furthermore substantially perpendicular to the two interface planes along which the first and second portions 12, 14 of each casing 2A, 2B are joined.

In order for the coolant fluid to flow from the inlet 24A to the outlet 24B, or more generally from the first casing 2A to the second casing 2B, these casings 2A, 2B are in fluid communication. Such fluid communication is achieved by holes made in each of the first casing 2A and the second casing 2B, these holes being illustrated on figure 3. The first casing 2A thereby has an opening 34 in its second portion 14 while the second casing 2B has an aperture 360 in its second portion 14.

The opening 34 and the aperture 36 are illustrated on figure 4. Both are through holes in their respective casings 2A, 2B so as to let the coolant fluid flow from the first casing 2A to the second casing 2B. While only one opening 34 and one aperture 36 are shown here, in other embodiments there could be multiple openings and/or multiple apertures in the casings 2A, 2B.

The aforementioned positioning of the inlet 24A on the first casing 2A and of the outlet 24B on the second casing 2B is such that the coolant fluid follows a U-turn trajectory between the first casing 2A and the second casing 2B. This U-turn trajectory is symbolised by a curved solid black arrow on figure 3.

The trajectory of the coolant fluid in the electrical heat exchanger 1 will now be briefly described in relation with figure 3. The coolant fluid enters the electrical heat exchanger 1 and the first casing 2A via the inlet 24A. It flows within the enclosure 18 of the first casing 2A around the first heating element 22A in an annular shape, that is to say both between the first portion 12 of the first casing 2A and the first heating element 22A, and between this first heating element 22A and the second portion 14 of this first casing 2A. The coolant fluid flows mainly along the longitudinal direction D and according to a first direction D1. Thereafter, the coolant fluid passes from the first casing 2A to the second casing 2B, via the opening 34 made in the second portion 14 of the first casing 2A and then via the aperture 36 made in the second portion 16 of the second casing 2B, these opening 34 and aperture 36 here facing each other. Once in the second casing 2B, the coolant fluid flows simultaneously between the second portion 14 of this second casing 2B and the second electrical heating element 22B, as well as between this second electrical heating element 22B and the first portion 12 of the second casing 2B, both mainly according to a second direction D2. The coolant fluid finally exits the second casing 2B and more generally the electrical heat exchanger 1 via the outlet 24B.

The present invention thus covers an electrical heat exchanger whose port is configured to prevent air trapping, without compromising the coolant fluid distribution within the electrical heat exchanger.

Many modifications and other embodiments of the invention set forth herein will come to mind to one skilled in the art to which the invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. An electrical heat exchanger (1) for the circulation of a coolant fluid, comprising at least one casing (2, 2A, 2B) and at least one electrical heating element (22, 22A, 22B), said casing (2, 2A, 2B) comprising a first portion (12) and a second portion (14) joined along an interface plane to define an enclosure (18) for receiving said electrical heating element (22, 22A, 22B), the casing (2, 2A, 2B) comprising a first longitudinal side (4) and a second longitudinal side (6), and a first lateral side (8) and a second lateral side (10) both extending between the longitudinal sides (4, 6), the casing (2, 2A, 2B) having at least one port (24, 24A, 24B) projecting out of the first lateral side (8) and extending longitudinally so that it constitutes an extension of one of the longitudinal sides (4, 6).

2. The electrical heat exchanger (1) according to the preceding claim, wherein the port (24, 24A, 24B) has a funnel shape.

3. The electrical heat exchanger (1) according to any of the preceding claims, wherein the first lateral side (8) out of which the port (24, 24A, 24B) projects comprises a segment which extends along a direction which is secant at a non-90° angle with a direction of the longitudinal side (4, 6).

4. The electrical heat exchanger (1) according to any of the preceding claims, wherein the electrical heating element (22, 22A, 22B) extends between the lateral sides (8, 10) and passes through at least one of the longitudinal sides (4, 6).

5. The electrical heat exchanger (1) according to any of the preceding claims, wherein the at least one casing (2, 2A, 2B) is configured so that the coolant fluid flows simultaneously between the first portion (12) and the electrical heating element (22, 22A, 22B) and between the second portion (14) and the electrical heating element (22, 22A, 22B).

6. The electrical heat exchanger (1) according to any of the preceding claims, wherein the at least one casing (2, 2A, 2B) is a first casing (2A) and the at least one electrical heating element (22, 22A, 22B) is a first electrical heating element (22A), the electrical heat exchanger (1) further comprising a second casing (2B) enclosing a second electrical heating element (22B), the first casing (2A) and the second casing (2B) being stacked so that both their first and second longitudinal sides (4, 6) and their first and second lateral sides (8, 10) are respectively aligned.

7. The electrical heat exchanger (1) according to any of the preceding claims, being configured so that the coolant fluid follows a U-turn trajectory between the first casing (2A) and the second casing (2B).

8. The electrical heat exchanger (1) according to the preceding claim, wherein the first casing (2A) and the second casing (2B) are in fluid communication via at least an opening (34) in the second portion (14) of the first casing (2A) and at least an aperture (36) in the second portion (14) of the second casing (2B).

9. The electrical heat exchanger (1) according to the preceding claim, wherein the port (24, 24A, 24B) of the first casing (2A) is an inlet (24A) constituting an extension of the first longitudinal side (4) and the port (24, 24A, 24B) of the second casing (2B) is an outlet (24B) constituting an extension of the second longitudinal side (6).

10. The electrical heat exchanger (1) according to the preceding claim, wherein the inlet (24A) and the outlet (24B) are symmetrical with respect to a straight line which passes through a midpoint (M) of a junction plane between the first casing (2A) and the second casing (2B).

11. The electrical heat exchanger (1) according to any one of claims 6 to 9, wherein there is a single electrical heating element (22, 22A, 22B) in each of the first casing (2A) and the second casing (2B).

12. The electrical heat exchanger (1) according to any of the preceding claims, wherein the first portion (12) and the second portion (14) are welded together.
